# EUROPÄISCHE PATENTANMELDUNG

(11) **EP 0 907 015 A2**
(43) Veröffentlichungstag der Anmeldung: **07.04.1999**
(21) Anmeldenummer: 98115301.8
(22) Anmeldetag: 14.08.1998
(51) Int. Cl.: F02D 41/38, F02D 41/28, F02M 55/02, F02M 63/02

(54) **Verfahren zur Bestimmung einer kraftstoffeinspritzbezogenen Kenngrösse für einen Verbrennungsmotor mit Common-Rail-Einspritzanlage**

(30) Priorität: 16.09.1997 DE 19740608
(71) Anmelder: DaimlerChrysler AG, 70567 Stuttgart (DE)
(72) Erfinder: Hemberger, Hans-Hubert, 73274 Notzingen (DE); Köhler, Jürgen, 73614 Schorndorf (DE)

(57) **Zusammenfassung**

Verfahren zur Bestimmung einer kraftstoffeinspritzbezogenen Kenngröße für einen Verbrennungsmotor mit Common-Rail-Einspritzanlage.

Die Erfindung bezieht sich auf ein Verfahren zur Bestimung wenigstens einer kraftstoffeinspritzbezogenen Kenngröße für einen Verbrennungsmotor mit einer Common-Rail-Kraftstoffeinspritzanlage individuell für jeden Motorbrennraum und jeden Einspritzvorgang.

Erfindungsgemäß wird der Druck in dem den Motorbrennräumen gemeinsam zugeordneten Verteilerdruckraum der Common-Rail-Kraftstoffeinspritzanlage über einen jeweiligen Kraftstoffeinspritzvorgang für einen jeweiligen Brennraum hinweg in seinem Verlauf mittels eines Drucksensors des Verteilerdruckraums erfaßt. Aus dem erfaßten Druckverlauf wird ein zugehöriges Druckverlaufsmuster gewonnen, aus dem die wenigstens eine kraftstoffeinspritzbezogene Kenngröße individuell für jeden Brennraum und jeden Einspritzvorgang bestimmt wird.

Verwendung z.B. für direkteinspritzende Dieselmotoren von Kraftfahrzeugen.

## Beschreibung

Die Erfindung sich auf ein Verfahren zur Bestimmung wenigstens einer kraftstoffeinspritzbezogenen Kenngröße für einen Verbrennungsmotor mit einer Common-Rail-Kraftstoffeinspritzanlage individuell für jeden Motorbrennraum und jeden Einspritzvorgang. Dies umfaßt insbesondere die Bestimmung der zylinderindividuell und pro Arbeitstakt ungemittelt tatsächlich in den jeweiligen Brennraum eingespritzten Kraftstoffmenge, und zwar bei getrennter Vor- und Haupteinspritzung getrennt die Voreinspritzmenge und die Haupteinspritzmenge, des tatsächlichen Einspritzzeitpunktes, der tatsächlichen Öffnungsdauer der Injektoren der Einspritzanlage, der Einspritzzeitpunkte von Vor- und Haupteinspritzung im Fall einer getrennten Vor- und Haupteinspritzung, des Zeitabstands zwischen Vor- und Haupteinspritzung und/oder des tatsächlichen Einspritzdrucks an der jeweiligen Einspritzdüse als der einen oder den mehreren ermittelten kraftstoffeinspritzbezogenen Kenngrößen.

Aus den Patentschriften DE 31 26 393 C2 und US 5.176.122 sowie der Offenlegungsschrift JP 08144826 A ist es bekannt, den Druck in dem den Motorbrennräumen gemeinsam zugeordneten Verteilerdruckraum einer Common-Rail-Kraftstoffeinspritzanlage mittels eines zugeordneten Drucksensors zu erfassen und das Ausgangssignal des Drucksensors zur Steuerung oder Regelung der Kraftstoffeinspritzung zu verwenden. Dabei wird das Drucksignal dieses Sensors nur an einem oder einigen wenigen Punkten seines zeitlichen Verlaufs pro Arbeitstakt eines Motorbrennraums herangezogen, insbesondere dazu, den Differenzdruck vor und nach eieinem Einspritzvorgang zu erfassen und aus dem zugehörigen Druckabfall die eingespritzte Kraftstoffmenge zu bestimmen. Diese bekannte Vorgehensweise, bei der nur ein oder einige wenige Druckwerte eines jeweiligen Einspritzvorgangs zur Bestimmung einer kraftstoffeinspritzbezogenen Kenngröße herangezogen werden, ist in ihrer erzielbaren Genauigkeit beschränkt. Denn das Ausgangssignal des im Verteilerdruckraum der Common-Rail-Einspritzanlage angeordneten Drucksensors besitzt einen komplexen Verlauf mit je einem Druckeinbruch für eine Kraftstoffeinspritzung in einen der meist mehreren Motorbrennräume, wobei diese Druckeinbrüche zeitlich rasch aufeinanderfolgen und von zugehörigen Druckschwingungseffekten und anderen Störungen überlagert sind. Der anhand von zwei gemessenen Druckwerten in einer Anfangsphase bzw. in einer Endphase eines Kraftstoffeinspritzvorgangs ermittelte Druckabfall ist daher nicht immer ein zuverlässiges Maß für die tatsächlich eingespritzte Kraftstoffmenge und andere kraftstoffeinspritzbezogene Kenngrößen.

In der Offenlegungsschrift EP 0 742 361 A2 ist ein Verfahren zum Erfassen der von einer Einspritzpumpe eines Dieselmotors geförderten und über Einspritzkanäle und zugeordnete Einspritzdüsen in die Motorbrennräume eingespritzten Kraftstoffmenge bekannt, bei dem für die Einspritzkanäle eine jeweilige Druckverlaufskurve während des Fördervorgangs zwischen der Einspritzpumpe und den Einspritzdüsen erfaßt und normiert und anschließend das Flächenintegral der normierten Druckverlaufskurve gebildet wird. Durch Bewertung mit einer Proportionalitätskonstante wird dann aus dem Flächenintegral die absolute Kraftstoffmenge bestimmt.

Der Erfindung liegt als technisches Problem die Bereitstellung eines Verfahrens der eingangs genannten Art zugrunde, mit dem sich eine oder mehrere kraftstoffeinspritzbezogene Kenngrößen mit geringem Sensorikaufwand vergleichsweise genau und zuverlässig bestimmen lassen.

Die Erfindung löst dieses Problem durch die Bereitstellung eines Verfahrens mit den Merkmalen des Anspruchs 1. Bei diesem Verfahren wird der Druck in dem den Motorbrennräumen gemeinsam zugeordneten Verteilerdruckraum der Common-Rail-Kraftstoffeinspritzanlage über einen jeweiligen Kraftstoffeinspritzvorgang für einen jeweiligen Zylinder hinweg nicht nur zu einem oder einigen wenigen Zeitpunkten, sondern in seinem gesamten Verlauf mittels eines Drucksensors des Verteilerdruckraums hochaufgelöst erfaßt. Aus dem erfaßten Druckverlauf wird ein zugehöriges Druckverlaufsmuster gewonnen, aus welchem wiederum die eine oder mehreren kraftstoffeinspritzbezogenen Kenngrößen individuell für jeden Brennraum und jeden Einspritzvorgang bestimmt werden. Dafür können verschiedene herkömmliche Methoden zur Mustererkennung und Klassifizierung Anwendung finden, worunter auch Regressions- und Diskriminanzverfahren fallen. In jedem Fall wird durch diese Vorgehensweise der Heranziehung des gesamten Druckverlaufsmusters für eine jeweilige Einspritzung der Druckverlauf im Verteilerdruckraum über den gesamten Einspritzvorgang hinweg zur Bestimmung dem kraftstoffeinspritzbezogenen Kenngrößen herangezogen, wodurch sich eine hohe Genauigkeit erzielen läßt, ohne daß hierfür eine aufwendige Sensorik erforderlich ist. Vielmehr genügt die Verwendung eines herkömmlichen Drucksensors im Verteilerdruckraum.

Bei einem nach Anspruch 2 weitergebildeten Verfahren werden die eine oder mehreren kraftstoffeinspritzbezogenen Kenngrößen anhand des gewonnenen Druckverlaufsmusters mittels eines neuronalen Netzwerks bestimmt das in diesem Fall die Aufgabe der Erkennung und Auswertung des Druckverlaufsmusters übernimmt. Dabei werden mehrere Funktionswerte des Druckverlaufsmusters als ein Eingangsvektor dem neuronalen Netzwerk zugeführt.

Eine vorteilhafte Ausführungsform der Erfindung ist in den Zeichnungen dargestellt und wird nachfolgend beschrieben. Hierbei zeigen:
- Fig. 1: ein Diagramm des von einem Drucksensor einer Verteilerdruckleitung einer Common-Rail-Kraftstoffeinspritzanlage eines Verbrennungsmotors zeitabhängig gemessenen Druckverlaufs in der Verteilerdruckleitung,
- Fig. 2: ein Diagramm des Zeitverlaufs von durch Signalvorverarbeitung aus gemessenen Druckverläufen entsprechend Fig. 1 gewonnenen Druckverlaufsmustern während eines jeweiligen Arbeitstaktes,
- Fig. 3: eine schematische Blockdiagrammdarstellung eines Verfahrens zur Bestimmung der Kraftstoffeinspritzmenge pro Brennraum und Arbeitstakt für einen Verbrennungsmotor mit Common-Rail-Kraftstoffeinspritzanlage unter Verwendung eines neuronalen Netzwerks und den in den Fig. 1 und 2 veranschaulichten Verfahrensschritten und
- Fig. 4: eine schematische Blockdiagrammdarstellung eines Verfahrens ähnlich demjenigen von Fig. 3, jedoch mit zusätzlicher Leckerkennung.

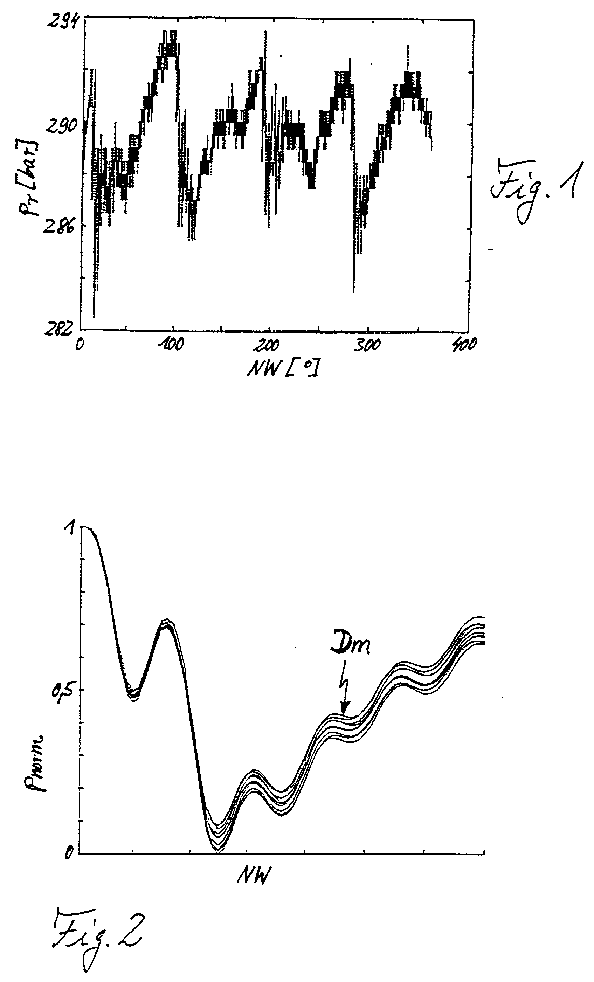

Im Diagramm von Fig. 1 ist ein typischer Abschnitt des von einem herkömmlichen Drucksensor in der Verteilerdruckleitung einer Common-Rail-Einspritzanlage eines Verbrennungsmotors, z.B. in einem Kraftfahrzeug, in Abhängigkeit vom Nockenwellenwinkel NW gemessenen Kraftstoffdruckverlaufs pᵣ in der Verteilerdruckleitung während eines Arbeitstaktes dargestellt, wobei sich dieses Beispiel auf einen vierzylindrigen Verbrennungsmotor bezieht. Es sind deutlich die Druckeinbrüche im Bereich der vier Kraftstoffeinspritzungen in den jeweiligen Zylinder zu erkennen. Es zeigt sich, daß die Druckeinbrüche bezüglich ihres Verlaufsmusters in Form, Tiefe und Dauer bei verschiedenen Arbeitspunkten und Einspritzmengen variieren. Die viermalige Einspritzung pro Motorarbeitstakt aus der allen Zylindern gemeinsamen Verteilerdruckleitung regt eine Druckgrundschwingung mit vierfacher Frequenz der Drehzahl und weitere Oberschwingungen an. Außerdem sind dem eigentlichen Nutzsignal in Form des Druckeinbruchs weitere Störungen überlagert. Die gemäß Fig. 1 gemessenen Druckverlaufsdaten stellen Rohdaten dar, aus deren Weiterverarbeitung und Auswertung nach dem erfindungsgemäßen Verfahren eine oder mehrere kraftstoffeinspritzbezogene Kenngrößen bestimmt werden, wie Einspritzmenge und/oder Einspritzdauer, gegebenenfalls getrennt für Vor- und Haupteinspritzungen, die Öffnungsdauer der Einspritzdüsen, d.h. Injektoren, der Zeitabstand zwischen Vor- und Haupteinspritzung und/oder der Düseneinspritzdruck, wobei die Kenngröße jeweils individuell und ungemittelt für jeden Einspritzvorgang jedes Zylinders ermittelt wird.

Dieses hochaufgelost ermittelte Druckverlaufs-Rohsignal wird dann einer Signalvorverarbeitung unterzogen, um daraus ein Druckverlaufsmuster für jeden einzelnen Einspritzvorgang zu gewinnen. Dazu wird das vom Drucksensor gelieferte Druckverlauf-Rohsignal mit einer bestimmten Auflösung von z.B. 1° Kurbelwellenwinkel abgetastet. Das Rohsignal wird dann zunächst tiefpaßgefiltert, z.B. mit einer Grenzfrequenz von 900Hz, um störendes Rauschen zu unterdrücken. Anschließend werden unter Zuhilfenahme eines vorgegebenen Fensters die Druckwerte im Zeitraum des jeweils betrachteten Kraftstoffeinspritzvorgangs einer der Injektoren herausgegriffen. Dann werden die Druckwerte im Fenster geeignet auf einen Referenzwert bezogen, z.B. auf den ersten Druckwert des Fensterausschnitts, und normiert, wodurch sich das zum betreffenden Einspritzvorgang gehörige Druckverlaufsmuster ergibt.

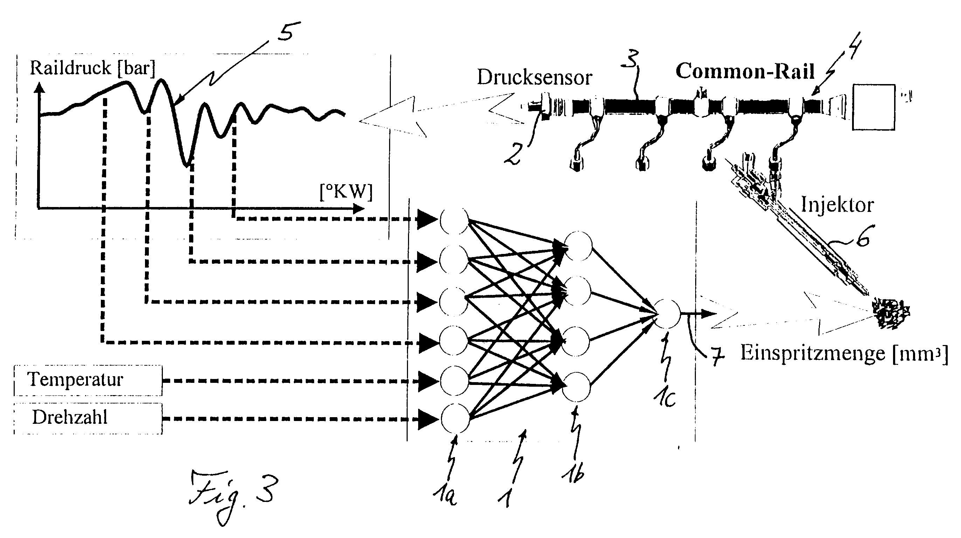

Im Diagramm von Fig. 2 sind derartig gewonnene, auf einen normierten Druck pₙₒᵣₘ skalierte Druckverlaufsmuster Dm dargestellt, die beispielsweise aus dem gemessenen Druckverlauf von Fig. 1 im Bereich zwischen etwa 180° und 220° Nockenwellenwinkel abgeleitet wurden. Dabei sind in Fig. 2 zehn Druckverlaufsmuster Dm dargestellt, die alle für denselben Motorarbeitspunkt, d.h. bei gleicher Motordrehzahl und Motorlast, aus zehn aufeinanderfolgenden Arbeitstakten gewonnen wurden. Aus Fig. 2 ist ersichtlich, daß alle zehn Druckverlaufsmuster Dm im wesentlichen gleich sind, d.h. die Muster ihrer Kurvenverläufe weitestgehend übereinstimmen. Die geringfügigen, erkennbaren Abweichungen zwischen den einzelnen Druckverlaufsmustern Dm beruhen auf geringfügigen Unterschieden der Einspritzmenge trotz gleichem Arbeitspunkt, was im wesentlichen auf Streuungen der vom zugehörigen Einspritzinjektor tatsächlich eingespritzten Istmenge bei gleicher Sollmenge zurückzuführen ist. Es zeigt sich, daß die jeweils tatsächlich eingespritzte Kraftstoffmenge sehr gut mit Form und Lage des vom Druckverlaufsmuster Dm, wie z.B. gemäß Fig. 2, repräsentierten Druckeinbruchs in der Verteilerdruckleitung der Common-Rail-Kraftstoffeinspritzanlage korreliert, was es rechtfertigt, aus dem jeweils gewonnenen Druckverlaufsmuster Dm eindeutig auf die zugehörige Kraftstoffeinspritzmenge zu schließen. Entsprechendes gilt nicht nur für die Kraftstoffeinspritzmenge, sondern auch die anderen einspritzbezogenen Kenngrößen, wie Einspritzbeginn und Einspritzdauer.

Es sind verschiedene Methoden möglich, um aus dem jeweils gewonnenen Druckverlaufsmuster den zugehörigen, zu bestimmenden Wert der betrachteten einspritzbezogenen Kenngröße zu ermitteln. Insbesondere können hier verschiedene Methoden zur Mustererkennung und Klassifizierung Anwendung finden, darunter auch Regressions- oder Diskriminanzverfahren. Besonders gut eignen sich zur Durchführung dieser Mustererkennungsaufgabe künstliche neuronale Netzwerke. Solche Netzwerke können bekanntlich sehr komplexe, nichtlineare Funktionen approximieren und zeichnen sich durch ihre Lernfähigkeit anhand von Beispielen aus. In einer überwachten Trainingsphase werden Eingangsgrößen und gewünschte Ausgangsgrößen an das Netz angelegt. Ein Lernalgorithmus sorgt dafür, daß der Fehler bei den Trainingsdaten minimiert und die darin implizierten Abhängigkeiten in das Netzwerk übernommen werden. Ein weiterer Vorteil ist die Fähigkeit neuronaler Netzwerke, auch bei verrauschten und nicht perfekten Daten gute Ergebnisse erzielen zu können.

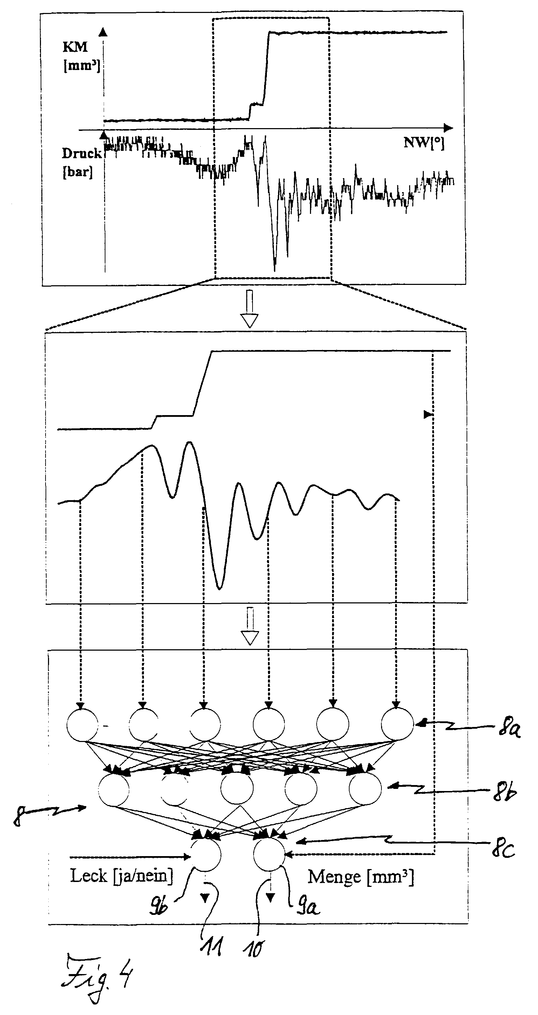

Fig. 3 zeigt ein Verfahrensbeispiel, bei dem ein solches neuronales Netzwerk 1 eingesetzt wird. In diesem Beispiel wird zunächst das Druckverlauf-Rohsigal von einem herkömmlichen Drucksensor 2 einer Verteilerdruckleitung 3 einer Common-Rail-Einspritzanlage 4 eines Kraftfahrzeug-Verbrennungsmotors einer Signalvorverarbeitung der oben erläuterten Art unterzogen, d.h. einer Abtastung mit z.B. 1° Kurbelwellenwinkel, Tiefpaßfilterung und einem Herausgreifen der Druckwerte im Zeitraum eines Einspritzvorgangs eines Injektors, z.B. aus dem Bereich -30° bis +37° Nockenwellenwinkel. Weiter wurde bei dieser Signalvorverarbeitung der erste Druckwert des Fensterausschnitts von allen Druckwerten des Fensters subtrahiert, um die Druckverlaufskurven auf ein einheitliches Niveau zu beziehen. Dann wurden die Druckverlaufskurven auf das Intervall zwischen 0,2 und 0,8 normiert. Das sich dadurch ergebende Druckverlaufsmuster 5 wird dann zusammen mit dem vorher subtrahierten ersten Druckwert als einem Referenzdruckniveau sowie der Motordrehzahl und der Motortemperatur als Eingangsvektor dem neuronalen Netz 1 zugeführt.

Als neuronales Netz 1 wurde speziell ein sogenanntes Mehrschicht-Perceptron-Netz mit einer Eingangsschicht 1a, einer versteckten Schicht 1b und einer Ausgangsschicht 1c verwendet. Den Neuronen wurde eine sigmoide Aktivierungsfunktion zugeordnet. Für die versteckte Schicht 1b stellte sich z.B. eine Anzahl von etwa 50 Neuronen als günstig heraus. Das Training des Netzes 1 erfolgte mit dem sogenannten RProp-Lernalgorithmus. Es zeigte sich, daß nach dem Netztraining die durchschnittliche Abweichung der vom Netz 1 approximierten von der tatsächlichen Kraftstoffeinspritzmenge, ermittelt auf einem Einspritzpumpenprüfstand, einem Fehler von nur etwa 3% entsprach. Hervorzuheben ist die Echtzeitfähigkeit des Verfahrens und die einfache, verwendbare Sensorik in Form des herkömmlichen Drucksensors 2. Durch die Musterauswertung der Druckverlaufskurven, die nicht nur einige wenige Druckwerte, sondern die ganze Zeitreihe des hochaufgelösten Druckverlaufs an einer größen Zahl von Stützstellen auswertet, läßt sich die vom jeweiligen Injektor 6 der Common-Rail-Einspritzeinlage 4 tatsächlich pro Arbeitsspiel eingespritzte Kraftstoffmenge vergleichsweise genau durch das neuronale Netz 1 bestimmen, das die betreffende Einspritzmengeninformation als in diesem Beispiel einziges Ausgangssignal 7 seiner Ausgangsschicht 1c abgibt. Die Genauigkeit ist so hoch, daß selbst Zyklenschwankungen der Einspritzmenge bei gleichem Motorarbeitspunkt erkennbar sind. Dies erlaubt eine sehr genaue Diagnose der Kraftstoffeinspritzvorgänge der Common-Rail-Einspritzanlage 4.

Fig. 4 zeigt schematisch ein zweites Verfahrensbeispiel, bei dem ein neuronales Netz 8 zur Durchführung der Mustererkennungsaufgabe benutzt wird. Der obere Teil von Fig. 4 zeigt ein Diagramm, das in Abhängigkeit vom Nockenwellenwinkel NW in der oberen Hälfte den Verlauf der Kraftstoffeinspritzmenge KM eines an einem Einspritzpumpenprüfstand durchgeführten Testeinspritzvorgangs und in seiner unteren Hälfte den von einem Drucksensor der Verteilerdruckleitung einer Common-Rail-Einspritzanlage eines Kraftfahrzeug-Verbrennungsmotors gemessenen Druckverlauf wiedergibt. Das Rohausgangsignal des Drucksensors wird dann wiederum der oben beschriebenen Signalvorverarbeitung unterzogen, woraus sich das zugehörige Druckverlaufsmuster ergibt, wie es im mittleren Teilbild von Fig. 4 in der unteren Hälfte dargestellt ist. In der oberen Hälfte des mittleren Teilbilds ist zur Verdeutlichung der Korrelation zwischen Einspritzverlauf und Druckeinbruch im Druckverlaufsmuster zeitrichtig der zeitliche Verlauf der Kraftstoffeinspritzmenge geglättet wiedergegeben.

Das Druckverlaufsmuster bildet wiederum einen Eingangsvektor für das neuronale Netz 8, das im wesentlichen gleich aufgebaut ist wie das Netz 1 von Fig. 3, insbesondere ebenfalls eine Eingangsschicht 8a, eine versteckte Schicht 8b und eine Ausgangsschicht 8c beinhaltet. Im Unterschied zum Netz 1 von Fig. 3 besteht jedoch die Ausgangsschicht 8c des Netzes 8 von Fig. 4 aus zwei Neuronen 9a, 9b. Das eine Neuron 9a der Ausgangsschicht 8c liefert wiederum als Ausgangssignal 10 die Information über die tatsächlich eingespritzte Kraftstoffmenge, während das andere Neuron 9b ein Ausgangssignal 11 abgibt, das indikativ dafür ist, ob ein Leck in der Common-Rail-Einspritzanlage vorliegt. Somit wird bei diesem Verfahrensbeispiel durch das verwendete neuronale Netzwerk 8 neben der Bestimmung der Kraftstoffeinspritzmenge eine zuverlässige Leckerkennung anhand der Musterauswertung der Kurvenverlaufsmuster des Drucks in der Verteilerdruckleitung realisiert. Es versteht sich, daß das neuronale Netz 8 zur Erfüllung dieser Funktion geeignet trainiert wird, wie dies dem Fachmann geläufig ist.

Die obige Beschreibung vorteilhafter Ausführungsbeispiele zeigt, daß mit dem erfindungsgemäßen Verfahren eine zuverlässige und genaue Bestimmung einer oder mehrerer kraftstoffeinspritzbezogener Kenngrößen in Echtzeit individuell für jeden Einspritzvorgang jedes Brennraums eines Verbrennungsmotors ermöglicht wird. Dies ist beispielsweise für direkt einspritzende Dieselmotoren von Kraftfahrzeugen vorteilhaft verwendbar, um die eingespritzte Kraftstoffmasse zylinderindiviuell und pro Arbeitsspiel ungemittelt bestimmen zu können. Dadurch läßt sich der Verbrennungsprozeß im Motor zuverlässig hinsichtlich dieser schadstoffrelevanten Kenngröße überwachen. Durch die erfindungsgemäße Kraftstoffdruckanalyse können auch größere Defekte, wie ein Totalausfall eines Injektors erkannt, diagnostiziert und der ausgefallene Injektor ermittelt werden, und zwar sowohl für den Fehlerfall eines dauernd geöffneten als auch eines dauernd geschlossenen Injektors. Außer solchen Diagnosezwecken kann die verfahrensgemäße Bestimmung einer oder mehrerer einspritzbezogener Kenngrößen für eine Einspritzmengenregelung genutzt werden. Insbesondere kann eine Einspritzmengenregelung realisiert werden, mit der Alterungseffekte, Verschmutzungserscheinungen und fertigungsbedingte Streuungen im Einspritzverhalten der Injektoren kompensiert werden.

Durch die hochaufgelöste Analyse des Kraftstoffdruckverlaufs während eines jeweiligen Einspritzvorgangs ist das erfindungsgemäße Verfahren in der Lage, bei Einspritzsystemen mit Vor- und Haupteinspritzung die Voreinspritzmenge und die Haupteinspritzmenge getrennt voneinander in Echtzeit brennraumindividuell aus dem Druckverlauf in der allen Brennräumen gemeinsamen Verteilerdruckleitung der Common-Rail-Einspritzanlage zu bestimmen. Damit läßt sich eine getrennte Einspritzregelung von Vor- und Haupteinspritzung realisieren. Eine möglichst exakte Voreinspritzungsregelung ist beispielsweise zur Verhinderung des sogenannten Schwarzraucheffektes von Bedeutung.

Je nach Anwendungsfall ist mit dem erfindungsgemäßen Verfahren neben oder anstelle der beschriebenen Einspritzmengenbestimmung eine Bestimmung des Einspritzbeginns möglich. Damit läßt sich eine Diagnose und/oder Regelung der Einspritzzeiten realisieren, wobei mit der Regelung fertigungsbedingte Streuungen im Einspritzverhalten der Injektoren ausgeglichen werden können.

Die Fähigkeit, unter Verwendung des erfindungsgemäßen Verfahrens die genannten Einspritzregelungen durchführen zu können, trägt wesentlich zur Verbesserung des Motorbetriebs bei. Es können fahrzeugindividuelle alterungs- und kraftstoffbedingte Einflüsse ausgeglichen werden. Des weiteren ist eine Adaption an geringfügige, individuelle Unterschiede bei verschiedenen Motoren gleichen Typs oder bei altererungsbedingter Änderung der entsprechenden Charakteristik möglich. Damit läßt sich eine zeitlich und quantitativ optimal angepaßte Kraftstoffeinbringung bewirken. Als Vorteile ergeben sich hieraus eine Reduktion von Schadstoffemissionen, eine Erhöhung der Laufruhe des Motors sowie eine Leistungsverbesserung und Verringerung des Kraftstoffverbrauchs.

## Patentansprüche

1. Verfahren zur Bestimmung wenigstens einer kraftstoffeinspritzbezogenen Kenngröße für einen Verbrennungsmotor mit einer Common-Rail-Kraftstoffeinspritzanlage (4) individuell für jeden Motorbrennraum und jeden Einspritzvorgang,
**dadurch gekennzeichnet**, **daß**
- der Druck in dem den Motorbrennräumen gemeinsam zugeordneten Verteilerdruckraum (3) der Common-Rail-Kraftstoffeinspritzanlage (4) über einen jeweiligen Kraftstoffeinspritzvorgang für einen jeweiligen Brennraum hinweg in seinem Verlauf mittels eines Drucksensors (2) des Verteilerdruckraums hochaufgelöst erfaßt wird und
- aus dem erfaßten Druckverlauf ein zugehöriges Druckverlaufsmuster (5) gewonnen und aus dem gewonnenen Druckverlaufsmuster mittels Mustererkennung die wenigstens eine kraftstoffeinspritzbezogene Kenngröße (7) individuell für jeden Brennraum und jeden Einspritzvorgang bestimmt wird.

2. Verfahren nach Anspruch 1, weiter
**dadurch gekennzeichnet**, **daß**
aus dem gewonnenen Druckverlaufsmuster (5) mittels eines neuronalen Netzwerks (1) die wenigstens eine kraftstoffeinspritzbezogene Kenngröße (7) bestimmt wird, wobei mehrere Funktionswerte des Druckverlaufsmusters als ein Eingangsvektor dem neuronalen Netzwerk zugeführt werden.
